# EUROPEAN PATENT SPECIFICATION

(11) **EP 2 020 012 B1**
(45) Date of publication and mention of the grant of the patent: **10.10.2012**
(21) Application number: 07732764.1
(22) Date of filing: 11.05.2007
(51) Int. Cl.: H01H 37/54, A47J 27/21, H01R 13/713, H01R 24/38, H01R 24/68

(54) **THERMAL CONTROL**
THERMISCHE REGELUNG
SYSTÈME DE CONTRÔLE THERMIQUE

(30) Priority: 15.05.2006 GB 0609623
(43) Date of publication of application: 04.02.2009
(73) Proprietor: OTTER CONTROLS LIMITED, Buxton, Derbyshire SK17 6LA (GB)
(72) Inventor: SHERRATT, Mark, Buxton, Derbyshire SK17 6LA (GB); SWANSON, John, Buxton, Derbyshire SK17 6LA (GB); WALFORD, Mark, Wilmslow, Cheshire SK9 4AL (GB)
(74) Representative: Cross, James Peter Archibald
(86) International application number: PCT/GB2007/001738
(87) International publication number: WO 2007/132204

(56) References cited:
- EP-A- 1 339 257
- GB-A- 2 333 901

## Description

The present invention relates to a thermal control, and particularly, although not exclusively, to a thermal control for a cordless liquid heating vessel.

In modem liquid heating vessels it is more and more common to have a liquid reservoir portion that is detachably mountable on a power base. Such cordless appliances generally comprise a base power unit and an appliance proper (ie including the liquid reservoir portion), the base unit being corded and cooperating electrical connectors being provided on the appliance proper and on the base unit to enable a heating element in the appliance proper to be powered via the base power unit when the appliance proper is appropriately seated with respect to the power base. Cordless appliances and their cooperating electrical connectors were originally such that in order to effect proper connection the appliance proper had to be set down onto its base in a predetermined relative orientation with respect to the power base. Disadvantages and inconveniences of this arrangement were appreciated, and this led to the development of 360° connector sets, being a cooperating power base and appliance connectors which enabled the liquid reservoir portion to be set down on its base irrespective of its rotational orientation with the power base.

Reference is made to our British Patents Nos. 2241390 and 2285716 for examples, respectively, of cordless connection systems which require a particular orientation of the liquid reservoir and power base and 360° cordless connection systems.

In all types of liquid heating vessels it is desirable to ensure that the heating element is not energized when no liquid is present in the reservoir. Such an occurrence is called a dry boil and is potentially dangerous and may also cause damage to the liquid heating vessel. This is particularly important with cordless liquid heating devices as the heating element and power source are separable. When liquid is boiled in a cordless kettle or hot water jug, the appliance proper is removed from its power base so that the boiled water can be dispensed as required. However, such an action can cause the liquid reservoir to be drained, and hence care must be taken that the appliance proper is not re-engaged with the power base in an activated state. Such an action may result in a dry boil situation. A number of manufacturers have provided means to ensure that the kettle does not become energised when replaced on its power base after being emptied. Examples of such means include our own British Patent GB 2331628, as well as EP 0380416 and GB 2202376.

It is also desirable for a thermal control to protect against switching on the liquid heating vessel when there is no water located in the reservoir. Our X4 control, described in GB2339088, discloses an arrangement whereby the thermal control is designed to latch in an open state until the appliance has cooled sufficiently for it to be reset. In the X4 device the thermal control is reset by the act of replacing it onto its power base, which causes the cordless electrical connector to engage with a cam within an inlet of the thermal control which subsequently resets the latch mechanism. Further examples of arrangements akin to this are disclosed in GB 2397438 and WO 95/34187.

A particular aspect of the X4 can be seen with reference to figures 4A to 4D of GB 2339088 which show a mechanism whereby a bimetal, once actuated, has to be reset in order that the control can supply power through to the associated heating element. The bimetal is mounted on a spring metal carrier which serves as an overcentre mechanism for a push rod (see feature 26). A cam is accommodated within a chamber that is formed in the 360° power input connector part of the control and is free to move within the chamber. An opening in the wall of the power input connector allows the cam to protrude from the chamber into an annular passageway that exists within the power input connector, and which is occupied by a complementary part of the power base connector when the appliance proper is engaged with the power base. The push rod is associated with the bimetal for operating a leaf spring to determine the condition of a set of switch contacts.

The shape of the cam and its position in the thermal control ensures that it does not interfere with the operation of the bimetal and the overcentre mechanism of the push rod in response to an overtemperature condition. However, when the appliance is lifted from its power unit, the removal of the power output connector from the power input connector causes the cam to return to its position in the annular passage way. When the appliance proper is re-engaged with the power base the cam is forced into engagement with the push rod and drives the push rod to reset the overcentre mechanism and reset the bimetal if it has not automatically reset as the temperature cools.

The thermal control industry is driven by high volumes and low cost, and efforts are constantly being made to improve the controls that are offered to appliance manufacturers. The present invention seeks to improve existing dry boil protection means, particularly in so far as they relate to cordless liquid heating vessels. The present invention additionally or alternatively seeks to simplify known arrangements relating to the above described advantages, and to improve safety and functionality in liquid heating vessel performance.

Patent publication EP-A-1 339 257 discloses a thermal control for a cordless liquid heating appliance, with a mechanism for switching off a trip lever and resetting a dry boil control when the appliance is lifted off a cordless power base.

According to the present invention there is provided a thermal control according to claim 1.

In order that the present invention be more readily understood, specific embodiments thereof will now be described with reference to the accompanying drawings in which:
Figure 1 shows an example of an over temperature control and an associated cordless connector in a separated condition;
Figure 2 shows an example of the overtemperature control and the cordless connector of figure 1 in an engaged condition; and
Figure 3 shows, for reference, a bottom view of a current version of our A1 thermal control.

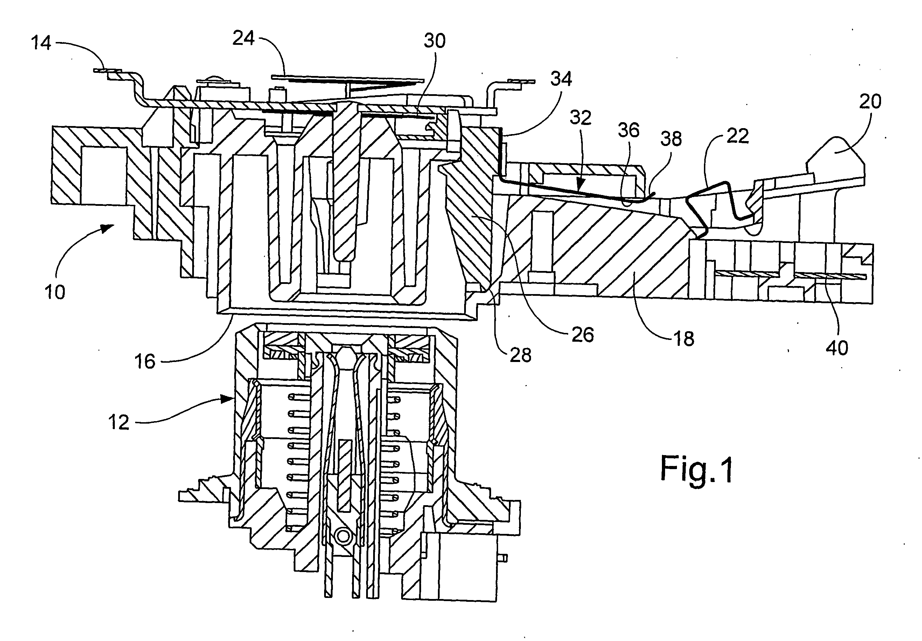

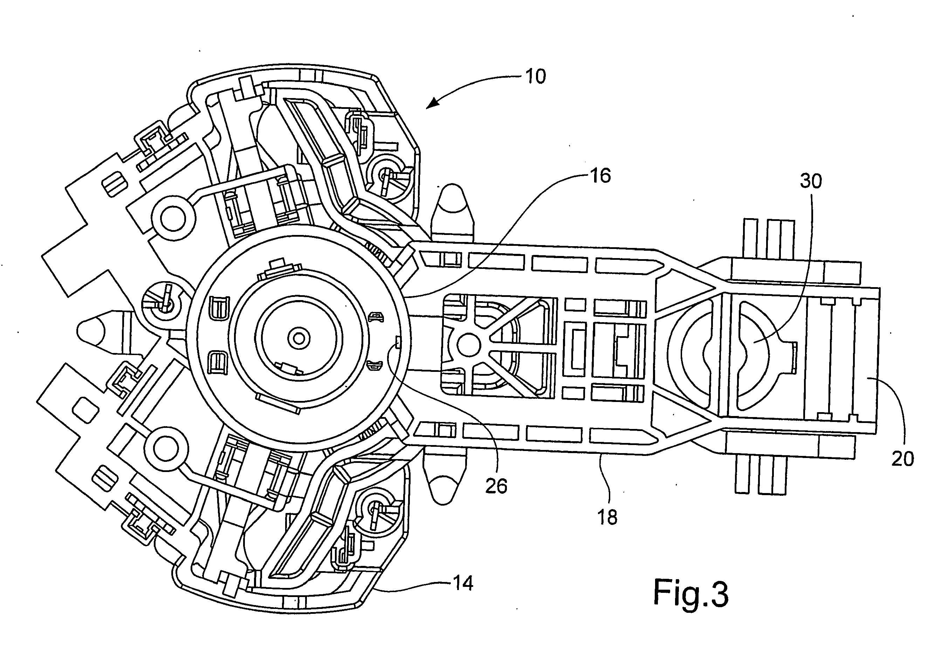

The present invention is described in relation to our A1 thermal control. Full details of the A1 control can be found in GB-A-2331628. A modified version of the A1 control is shown in figures 1 to 3 and provides an integrated power input connector and heating element overtemperature protection control (thermal control) for a cordless liquid heating vessel. The thermal control includes a thermally responsive switch actuator (such as a bimetal) arranged to determine the condition of a set of switch contacts by way of an intermediate member (such as a push rod) movable between first and second positions corresponding to open and closed conditions of the switch contacts. A spring latch holds the switch contacts in the open position after operation of the bimetal. The spring latch is operable to cooperate with the push rod to hold the switch contacts open, and to allow the thermal control to be reset by removal of the appliance proper from the power base. As in the X4 control, a cam is located within the power input connector and is operable to be moved when a power output connector of the power base is engaged therewith. The cam is coupled with the spring latch such that movement of the cam is transferred to the spring latch so that the spring latch cooperates with the push rod and causes the bimetal to be reset.

As will be appreciated from the foregoing the presently described embodiments disclose a single mechanism that is operable to cause a liquid heating appliance proper to switch off when it is removed from its power base unit and to reset the dry boil.

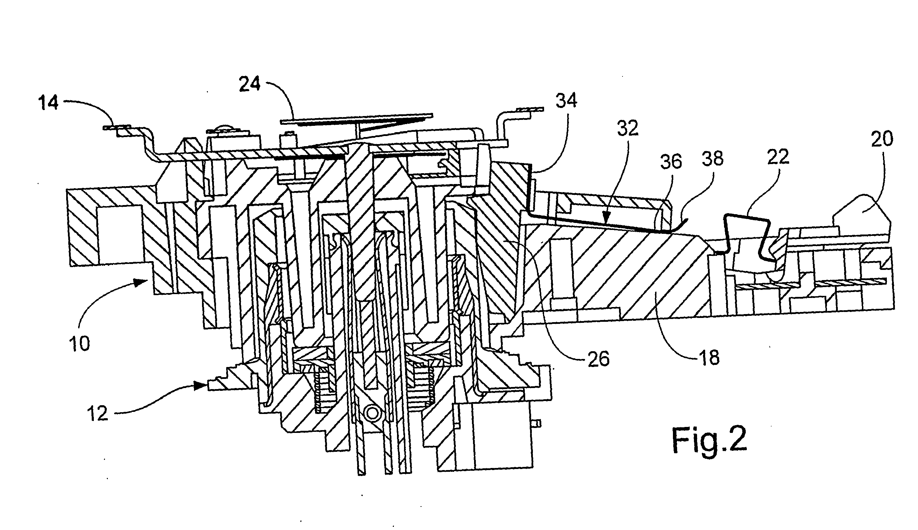

Figure 1 shows the A1 thermal control 10 (or overtemperature control) and a power base connector 12 in a separated arrangement. In the illustrated embodiment the electrical connector 12 is our CS7 cordless connector. The overtemperature control 10 comprises a body, typically moulded from a plastics material. The body 14 of the overtemperature control 10 comprises an annular passageway 16 into which the power base connector 12 can be engaged. This arrangement is shown in figure 2.

The overtemperature control 10 will typically be located in the appliance proper. The overtemperature control 10 is operable to protect a heating element, also located in the appliance proper, from dry boiling. It will be appreciated that both the overtemperature control and the heating element may be located in a base portion of the appliance control.

The body 14 moulding of the thermal control 10 is formed with an extension 18 which carries a trip-lever 20 mounted by an overcentre arrangement which provides for pivotal movement of the trip lever 20 between two stable positions. The overcentre action is provided by a "C" spring 22. Though not readily visible in the drawings, it will be understood that the trip lever 20 and the extension 18 have complementary parts of a pivotal V-shaped bearing and that a compression spring acting between spaced-apart but facing abutments of the trip lever 20 and the extension 18 holds the bearing intact whilst permitting pivotal movement of the trip lever 20 relative to the extension 18 between the two positions. This described in our British Patent 2397438.

A snap acting bimetal 24, such as a dished bimetallic disc, provides the impetus for movement of the trip lever 20 between its opposite positions when the liquid heating vessel performs a heating operation. The A1 control comprises three bimetals. The first and second bimetals are used in the boil control, as current standards required that there be at least two boil control actuators. It will be noted that only one of these bimetals is shown in the figures. The third bimetal 40 is located below the trip lever 20, and acts as a steam sensor. The appliance is arranged such that steam generated in a boil operation is diverted towards the steam sensor bimetal. A snap action transformation by the steam sensor bimetal 40 causes the trip lever 20 to be urged into an off position.

The movement of the trip lever 20 is transferred to one or more leaf springs on the body moulding 14 of the thermal control 10 for determining the condition, open or closed, of electrical contacts between the appliance proper and the power base unit and thereby determining whether or not the heating element in the liquid reservoir will be energized.

The cam 26 is located in the annular passageway 16 of the body moulding 10. The cam 26 is moveable about a pivot 28 and is biased in position. When the cordless connector 12 of the power base is engaged with the thermal control 10 the cam 26 is urged against the bias towards the wall of the annular passageway 16. When looking at figures 1 and 2 it will be appreciated that the cam 26 is pivoted about its lower end and is urged to the right in a generally clockwise direction by the cordless connector 12 of the power base when the liquid reservoir and the power base are engaged.

The cam 26 arrangement in the A1 control is described in GB 2397438, and works in a similar way to the X4 control in that upon re-engagement of the appliance proper with the power base the cam 26 is operable to reset the dry boil control. In the embodiment illustrated in figures 1 and 2 the cam 26 is operable to cooperatively act with a latch spring 30 so as to reset the dry boil control bimetal 24. A full description of this process can be found in our British Patents 2397438 and 2410615.

In the present embodiment the cam 26 is attached to a resilient strip 32. The strip 32 comprises first 34 and second 36 ends, and is attached to the cam 26 at the first end 34. The second end 36, remote from the cam 26, comprises an angled portion 38. The angled portion 38 is operable to engage with a portion of the trip lever 20, and, when engaged, opposes any attempt to move the trip lever 20 into an "ON" position.

Thus, as will be apparent from figure 1, when the liquid reservoir and the power base are separated the cam 26 protrudes into the annular passageway 16, and hence causes the resilient strip 32 to assume a first position where it engages with a portion of the trip lever 20, and hence urges the trip lever 20 into its 'off' position. The position of the resilient strip 32, and its engagement with the trip lever 20, also opposes the trip lever 20 in being moved into its 'on' position. Effectively the trip lever 20 is biased in its 'off' position.

As shown in figure 2, when the power base cordless connector 12 is engaged with the thermal control 10, the cam 26 is pushed out of the annular passageway 16. This movement of the cam 26 causes the resilient strip 32 to be moved to a second position where it no longer engages with the trip lever 20. In the illustrated embodiment the resilient strip 32 is caused to move outwardly with respect to the annular passageway 16, and the angled end portion 38 to move downwards with respect to the trip lever 20. Accordingly the trip lever 20 is no longer in its 'off' position, and hence the liquid heating vessel may be activated as usual.

Should the liquid reservoir be removed from the power base with the thermal control 10 in its 'on' position the cam 26 will return to its inner position - ie protruding into the annular passageway 16, and the angled end portion 38 of the resilient strip 32 will move so as to engage with the trip lever 20 and cause the trip lever 20 to move to its 'off' position, as shown in figure 1.

In preferred embodiments the resilient strip 32 is operable to fit into an aperture formed between the trip lever 20 and the extension 18. When the appliance proper is removed from the base unit, and the cam 26 is biased so as to project into the annular passageway 16, the angled portion 38 of the resilient moves into the aperture between the trip lever and the extension 18 so its angled end portion 38 may engage a part of the trip lever, thus biasing the trip lever into an off position. When the cam 26 is urged against its bias out of the annular passageway by the electrical connector the resilient strip is caused to move such that the angled end portion 38 is pushed through the aperture, and hence no longer opposes movement of the trip lever 20.

The present embodiment thus allows for the liquid heating vessel to be automatically switched off when the liquid reservoir is removed from the power base. This has the advantage that the liquid reservoir portion cannot be replaced onto the power base in an activated state when the liquid has been poured out of the reservoir. Furthermore, the present arrangement allows for a thermal control 10 which protects against switching on the liquid heating vessel when no water is present therein and to latch the vessel into an 'off' state until the liquid heating vessel has cooled to a sufficient level to be reset.

From the foregoing it will be apparent that the present invention combines, in a single mechanism, the desirable features of resetting the dry-boil bimetal and switching off the thermal control 10 as the liquid reservoir is removed from the power base. This dual action is achieved by motion of the cam 26, which is operable to reset the dry boil control as in GB 2397438, but also causes the resilient strip 32 to operate in such a fashion as to cause the trip lever 20 to be biases into an 'off' position when the appliance proper is lifted from the base unit. A further advantageous feature is that the trip lever 20 is latched into an 'off' position for the time that the liquid reservoir unit is removed from its power base.

It is to be appreciated that the above embodiment is described by way of example only, and that many variations are possible within the scope of the attached claims.

## Claims

1. A thermal control (10) for a cordless liquid heating vessel, said vessel comprising an appliance proper with a heating element and a power base, the thermal control (10) having a switch (20) operable to energise the heating element and control means (24) operable to de-energise the heating element in the event of the vessel boiling dry or being switched on in an empty state, the switch (20) being latched in an off state in the event of the control means de-energising the heating element, the thermal control (10) comprising a power input connector, including an annular passageway (16), for engagement with a power output connector (12) of the power base, and having a cam (26) operable to reset the control means (24) and to automatically bias the switch (20) into an off position while the power input connector is separated from the power output connector (12), the cam (26) being coupled with a member (32) operable to engage with the switch (20), **characterised in that** the cam (26) is biased to move inwardly relative to the annular passageway (16), and the member (32) is arranged to move with the cam (26) when the power input connector is separated from the power output connector (12) such that the member (32) latches the switch (20) in an off position.

2. A thermal control according to claim 1, wherein the member (32) is resilient and is arranged to urge the switch (20) into the off position when the power input connector is separated from the power output connector (12).

3. A thermal control according to claim 1 or 2, wherein the member (32) comprises a shaped strip attached to said cam (26).

4. A thermal control according to claim 3, wherein the strip (32) has an end portion (38) operable to engage with a portion of the switch (20) so as to urge the switch (20) into the off position.

5. A liquid heating vessel comprising a thermal control (10) in accordance with any preceding claim.

## Patentansprüche

1. Thermische Regelung (10) für ein kabelloses Flüssigkeitsheizgefäß, wobei das Gefäß eine eigene vorrichtung mit einem Heizelement und eine Strombasis umfasst, die thermische Regelung (10) einen Schalter (20), der betätigt werden kann, um das Heizelement einzuschalten, und Steuermittel (24) aufweist, die betätigt werden können, um das Heizelement auszuschalten, falls das Gefäß trocken kocht oder in einem leeren zustand eingeschaltet wird, der Schalter (20) in einem Aus-Zustand verriegelt wird, falls die Steuermittel das Heizelement ausschalten, die thermische Regelung (10) einen Stromeingangsanschluss, der einen ringförmigen Durchgang (16) umfasst, zum Eingriff mit einem Stromausgangsanschluss (12) der Strombasis umfasst und einen Nocken (26) aufweist, der betätigt werden kann, um die Steuermittel (24) zurückzusetzen und den Schalter (20) automatisch in einer Aus-Stellung vorzuspannen, während der Stromeingangsanschluss vom Stromausgangsanschluss (12) getrennt ist, der Nocken (26) mit einem Element (32) gekoppelt ist, das betätigt werden kann, um in den Schalter (20) einzugreifen, **dadurch gekennzeichnet, dass** der Nocken (26) vorgespannt wird, um sich in Bezug auf den ringförmigen Durchgang (16) nach innen zu bewegen, und das Element (32) so ausgelegt ist, dass es sich mit dem Nocken (26) bewegt, wenn der Stromeingangsanschluss vom Stromausgangsanschluss (12) getrennt wird, derart dass das Element (32) den Schalter (20) in einer Aus-Stellung verriegelt.

2. Thermische Regelung nach Anspruch 1, wobei das Element (32) elastisch und so ausgelegt ist, dass es den Schalter (20) in die Aus-Stellung drückt, wenn der Stromeingangsanschluss vom Stromausgangsanschluss (12) getrennt wird.

3. Thermische Regelung nach Anspruch 1 oder 2, wobei das Element (32) einen geformten Streifen umfasst, der am Nocken (26) befestigt ist.

4. Thermische Steuerung nach Anspruch 3, wobei der Streifen (32) einen Endabschnitt (38) aufweist, der so betätigt werden kann, dass er in einen Abschnitt des Schalters (20) eingreift, um den Schalter (20) in die Aus-Stellung zu drücken.

5. Flüssigkeitsheizgefäß, umfassend eine thermische Regelung (10) nach einem der vorhergehenden Ansprüche.

## Revendications

1. Dispositif de commande thermique (10) pour un récipient de chauffage de liquide sans fil, ledit récipient comprenant un appareil doté d'un élément chauffant et d'une base d'alimentation, le dispositif de commande thermique (10) ayant un interrupteur (20) utilisable pour activer l'élément chauffant et des moyens de commande (24) utilisables pour désactiver l'élément chauffant dans le cas où le récipient bouillirait à sec ou serait allumé dans un état vide, l'interrupteur (20) étant verrouillé dans un état désactivé dans le cas où les moyens de commande désactiveraient l'élément chauffant, le dispositif de commande thermique (10) comprenant un connecteur d'entrée d'alimentation, incluant un passage annulaire (16), pour une mise en prise avec un connecteur de sortie d'alimentation (12) de la base d'alimentation, et ayant une came (26) utilisable pour réarmer les moyens de commande (24) et pour amener automatiquement l'interrupteur (20) dans une position désactivée tandis que le connecteur d'entrée d'alimentation est séparé du connecteur de sortie d'alimentation (12), la came (26) étant couplée à un élément (32) utilisable pour se mettre en prise avec l'interrupteur (20), **caractérisé en ce que** la came (26) est amenée à se déplacer vers l'intérieur par rapport au passage annulaire (16), et l'élément (32) est conçu pour se déplacer avec la came (26) lorsque le connecteur d'entrée d'alimentation est séparé du connecteur de sortie d'alimentation (12) de telle sorte que l'élément (32) verrouille l'interrupteur (20) dans une position désactivée.

2. Dispositif de commande thermique selon la revendication 1, dans lequel l'élément (32) est élastique et est conçu pour amener de force l'interrupteur (20) dans la position désactivée lorsque le connecteur d'entrée d'alimentation est séparé du connecteur de sortie d'alimentation (12).

3. Dispositif de commande thermique selon la revendication 1 ou 2, dans lequel l'élément (32) comprend une bande profilée attachée à ladite came (26).

4. Dispositif de commande thermique selon la revendication 3, dans lequel la bande (32) a une partie d'extrémité (38) utilisable pour se mettre en prise avec une partie de l'interrupteur (20) de façon à amener de force l'interrupteur (20) dans la position désactivée.

5. Récipient de chauffage de liquide comprenant un dispositif de commande 5 thermique (10) selon l'une quelconque des revendications précédentes.
